# EUROPEAN PATENT SPECIFICATION

(11) **EP 3 304 768 B1**
(45) Date of publication and mention of the grant of the patent: **07.10.2020**
(21) Application number: 16732368.2
(22) Date of filing: 25.05.2016
(51) Int. Cl.: H04B 7/185

(54) **SYNCHRONIZATION TIMING IN A SPLIT LOCATION HUB**
SYNCHRONISATIONSZEITPLANUNG IN EINER NABE MIT GETEILTER POSITION
SYNCHRONISATION TEMPORELLE DANS UN CONCENTRATEUR À EMPLACEMENT DIVISÉ

(30) Priority: 31.05.2015 US 201562168865 P
(43) Date of publication of application: 11.04.2018
(73) Proprietor: Hughes Network Systems, LLC, Germantown, MD 20876 (US)
(72) Inventor: SUBRAMANIAM, Bala, Germantown, Maryland 20876 (US); BUTEHORN, Matt, Germantown, Maryland 20876 (US)
(74) Representative: Reeve, Nicholas Edward
(86) International application number: PCT/US2016/034144
(87) International publication number: WO 2016/196133

(56) References cited:
- WO-A2-2016/195813
- US-A1- 2002 105 976
- US-B1- 9 026 042

## Description

### FIELD

The present disclosure relates to a method and a system for providing synchronization timing for a split hub type operation. In particular, the present disclosure provides synchronization timing when the transmission equipment is distant from traffic/internet access equipment; for example, when the transmission equipment is on an aircraft, but the traffic/internet access equipment is on the ground.

US granted patent 9,026,042 B1 discloses a rain diversity switchover system that includes a diversity Satellite Access Station (SAS) including a transmitter modem and a receiver modem in communication with a satellite. The system further includes a primary SAS including a transmitter modem and a receiver modem in communication with the satellite via a second satellite antenna, where the transmitter and receiver modems of the primary SAS are synchronized with the transmitter and receiver modems of the diversity SAS via a common time source. Further, a hub data processor adjusts a timing of transmissions from the diversity SAS to the satellite relative to the common time source in accordance with a difference between a time of flight from the diversity SAS to the satellite and a time of flight from the primary SAS to the satellite. Additionally, a switchover controller controls a rain diversity switchover between the primary SAS and the diversity SAS.

### SUMMARY

This Summary is provided to introduce a selection of concepts in a simplified form that is further described below in the Detailed Description. The invention is defined by the independent claims to which reference is now made. Advantageous features are set out in the dependent claims.

A split gateway hub for a bent-leg communication system is disclosed. The gateway hub includes: a modulator to modulate a bit stream into a signal to be transmitted to a remote terminal via a radio frequency (RF) signal; a Time Synchronization Application (TSA), geographically co-located with the modulator, to provide timing reference and synchronization to the remote terminal; a network access component to provide traffic for the bit stream; and an Inroute Group Manager (IGM) to manage the traffic to and from the remote terminal. In the split gateway hub, the IGM is disposed geographically remote from either the TSA or from the network access component, and the bent-leg communication system uses a satellite or a High Attitude Platform (HAP) for relaying the RF signal.

Additional features will be set forth in the description that follows, and in part will be apparent from the description, or may be learned by practice of what is described.

### DRAWINGS

In order to describe the manner in which the above-recited and other advantages and features may be obtained, a more particular description is provided below and will be rendered by reference to specific embodiments thereof which are illustrated in the appended drawings. Understanding that these drawings depict only typical embodiments and are not therefore to be considered to be limiting of its scope, implementations will be described and explained with additional specificity and detail through the use of the accompanying drawings.
FIG. 1 illustrates a logical view of an exemplary satellite/High Altitude Platform (HAP) split hub communication system, according to various embodiments.
FIG. 2 illustrates a logical view of an exemplary geographically diverse hub communication system, according to various embodiments.
FIG. 3 illustrates synchronization timing for a bent-pipe communications system according to various embodiments.
FIG. 4 is a logical diagram of an exemplary system that may be implemented on a split location hub for an embodiment of the invention.

### DETAILED DESCRIPTION

Embodiments are discussed in detail below.

The terminology used herein is for describing particular embodiments only and is not intended to be limiting of the present disclosure. As used herein, the singular forms "a," "an" and "the" are intended to include the plural forms as well, unless the context clearly indicates otherwise. Furthermore, the use of the terms a, an, etc. does not denote a limitation of quantity, but rather denotes the presence of at least one of the referenced items. The use of the terms "first," "second," and the like does not imply any particular order, but they are included to either identify individual elements or to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. Although some features may be described with respect to individual exemplary embodiments, aspects need not be limited thereto such that features from one or more exemplary embodiments may be combinable with other features from one or more exemplary embodiments.

A star topology communication system can include a gateway hub at the center of the star and remote terminals at the points of the star. In exemplary embodiments, the hub sends a continuous Digital Video Broadcasting - Satellite - Second Generation (DVB-S2) Time Division Multiplexing (TDM) data stream to a satellite for broadcast to all the remote terminals in the coverage region. The remote terminals use Time Division Multiplexing Access (TDMA) to access shared inroute channels for transmissions through the satellite to the hub. In TDMA, each remote terminal transmits its data bursts to the satellite for relay to the hub such that the bursts arrive within a narrow window of time, the aperture, within a specified burst of a particular frame at the hub. Such star-topology relay communication systems are also known as a bent pipe transmission as the satellite provides the bend in the bent pipe. Typically, the timing reference and synchronization in the bent-pipe system is maintained at the gateway hub.

The present teachings a gateway hub and VSAT network where the gateway hub components are split between the hub and a distant location, for example, a satellite, a low altitude aircraft. The present teachings are also applicable where a modulator/demodulator is geographically split from an internet traffic source. This configuration would be desired when the feeder link bandwidth resource between hub and the distant location is limited, or when a geographically diverse hub is desired. Such a configuration is termed split hub, and timing synchronization becomes a problem in a split hub VSAT network.

In exemplary embodiments, a gateway is where a Timing Synchronization Application (TSA) and the modulators reside. In exemplary embodiments, a hub is where a traffic sink or source resides.

### Embodiment 1 for a Split Hub

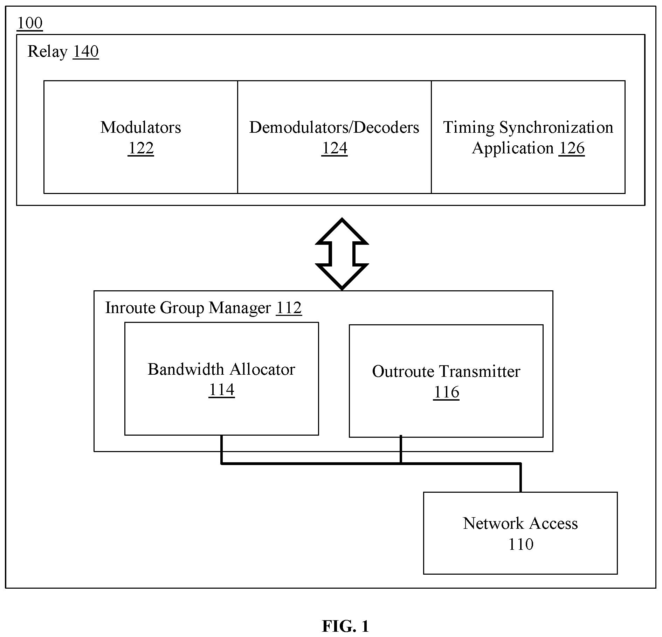

FIG. 1 illustrates a logical view of an exemplary split hub communication system, according to various embodiments.

In an exemplary split hub system 100, a traffic/network access component 110 and an Inroute Group Manager (IGM) 112 resides on the ground, and a transmission component resides on a relay 140. In exemplary embodiments, the IGM 112 and the network access 110 are geographically co-located. In exemplary embodiments, the network access 110 may be a traffic sink and source.

In exemplary embodiments, the relay 140 can include an aircraft, a satellite, a

High Altitude Platform, or the like. The transmission component, for example, a modulator 122, a demodulator 124 and a Timing Synchronization Application (TSA) 126, reside on the relay 140 that is transmitting and receiving to/from a remote terminal (not shown), for example, a VSAT terminal.

The standard DVB-S2 Outroute does not have any time marker that a remote terminal can use to synchronize its time reference with the relay 140. However, the remote terminal must establish a time reference that is within tens of microseconds of the relay 140's time reference so that the remote terminal can transmit bursts that arrive at the relay 140 in the assigned frames at the assigned times (i.e., within the right aperture).

According to various embodiments, the relay 140's TSA 126 provides a time reference by transmitting a Superframe Numbering Packet (SFNP) on the Outroute once every Superframe marker (for example, every 360 milliseconds). For the remote terminal to determine exactly when the Superframe marker occurred at the TSA 126 disposed in the relay 140, the remote terminal needs to subtract the total SFNP delay from the time when it received the SFNP. In exemplary embodiments, the SFNP delay is equal to two separate delays: a relay delay and a transmission time from the relay 140 to the specific remote terminal.

In exemplary embodiments, the transmission time from the relay 140 to the specific remote terminal can be determined during "Ranging". The ranging value can drift slightly due to movement of the relay 140. To adjust the ranging value, an estimated closed loop timing algorithm may estimate the remote terminal to relay delay. In exemplary embodiments, the estimated closed loop timing algorithm may be implemented at the inroute group manager 112, for example, in a bandwidth allocator 114. This estimated range delay may be repeatedly sent to the remote terminals in the SFNP packet via an outroute transmitter 116. The estimated range delay may include a delay of transmission from when the packet is scheduled for transmission to when it is actually transmitted.

### Embodiment 2 for a Split Hub:

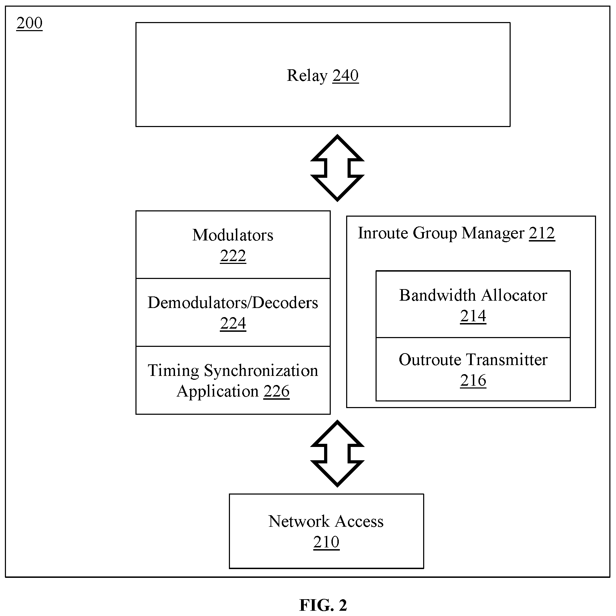

FIG. 2 illustrates a logical view of an exemplary geographically diverse hub communication system, according to various embodiments.

In a split hub system 200, a traffic/internet access component 210 resides on the ground but a far distance from transmission equipment. According to various embodiments, a far distance can include distances greater than 5 miles, 10 miles, 20 miles, 50 miles, 100 miles, 1000 miles, 5000 miles, 10000 miles or the like. In exemplary embodiments, the transmission components including a modulator 222, a demodulator 224 and a timing synchronization application (TSA) 226, that reside at a site that is diverse from the transmitting and receiving to/from a remote terminal (not shown), for example, a VSAT terminal.

The standard DVB-S2 Outroute does not have any time marker that a remote terminal can use to synchronize its time reference with the a relay 240. However, the remote terminal must establish a time reference that is within tens of microseconds of the relay 240's time reference so that the remote terminal can transmit bursts that arrive at the relay 240 in the assigned frames at the assigned times (i.e., within the right aperture).

According to various embodiments, the relay 240's TSA 226 provides a time reference by transmitting a Superframe Numbering Packet (SFNP) on the Outroute once every Superframe marker (for example, every 360 milliseconds). For the remote terminal to determine exactly when the Superframe marker occurred at the relay 240, the remote terminal needs to subtract the total SFNP delay from the time when it received the SFNP. The SFNP delay is equal to two separate delays: a relay delay and a transmission time from the relay 240 to the specific remote terminal.

In exemplary embodiments, the transmission time from the satellite to the specific remote terminal can be determined during "Ranging". The ranging value can drift slightly due to movement of the relay 240. To adjust the ranging value, an estimated closed loop timing algorithm may estimate the remote terminal to relay delay. In exemplary embodiments, the estimated closed loop timing algorithm may be implemented at the Inroute Group Manager (IGM) 212, for example, in a bandwidth allocator 214. This estimated relay delay may be repeatedly sent to the remote terminals in the SFNP packet via an outroute transmitter 216. The estimated satellite delay may include a delay of transmission from when the packet is scheduled for transmission to when the packet is actually transmitted.

### Synchronization Timing for a Split Hub:

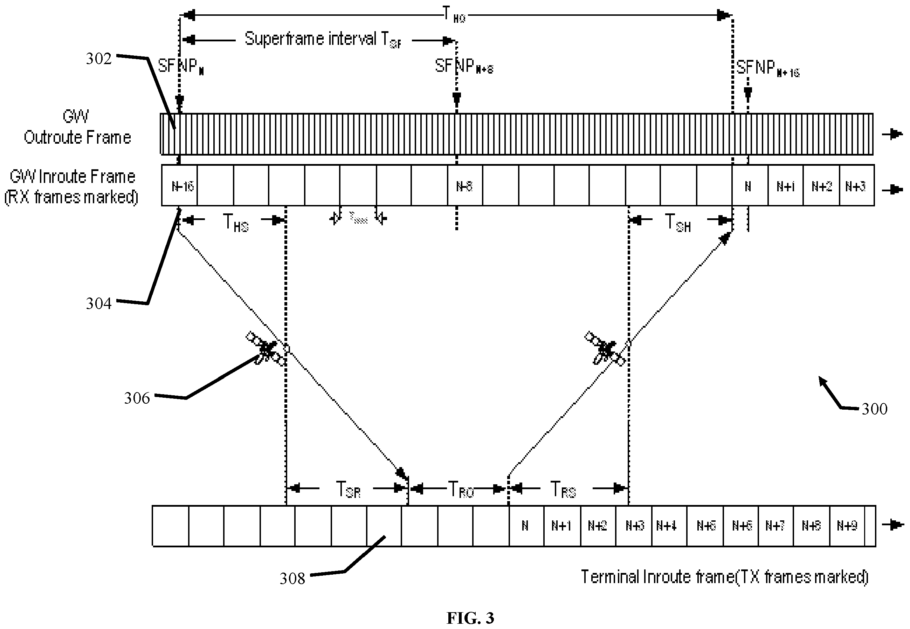

FIG. 3 illustrates synchronization timing for a bent-pipe communications system according to various embodiments.

A bent-pipe communication system 300 can use a relay 306 to communicate between a remote terminal (not shown) and a gateway (not shown). The relay 306 can be located remote from a gateway and can include, for example, a satellite, an aircraft, a High Altitude Platform or the like. A gateway outroute frame 302 represents frames and slots (or timeslots) out bound from the gateway to a terminal. A gateway inroute frame 304 represents frames in bound from the terminal to the gateway. A terminal inroute frame 308 represents frame in bound from the gateway to the terminal. Various delays can be added as the signal is propagated from the gateway to the terminal and back. The timing delays of the bent-pipe communication system 300 using the relay 306 are illustrated in FIG. 3 and can be as follows:
- **T_{HO}:** A gateway offset time that represents a time interval between the ideal instant of transmission of SFNP_{N} at the gateway and the start of reception of frame N at the gateway. This is also known as space-time offset (STO).
- **T_{HS}:** A propagation time from gateway to the relay 306 (satellite or aircraft) (same value as **T_{SH}**)
- **T_{SR}:** A propagation time from the relay 306 (satellite or aircraft) to the remote terminal (same value as **T_{RS}**)
- **T_{RO}:** A terminal offset time that represents a time between an "ideal" receipt of SFNP_{N} at a remote terminal and the transmit time for the start of transmission for frame N at this terminal.
- **T_{RS}:** A propagation time from terminal to the relay 306 (satellite or aircraft).
- **T_{SH}:** A propagation time from a relay 306 (satellite or aircraft) to the gateway.
- **SFNP_{N}:** Superframe numbering packet that marks frame N.

When a portion of the gateway, for example, a modulator, a demodulator, a TSA and a transceiver are co-located at the relay 306, then **T_{HO}** and **T_{SH}** are essentially 0. In exemplary embodiments, the **T_{HS}** and **T_{SH}** propagation times can be determined by ranging.

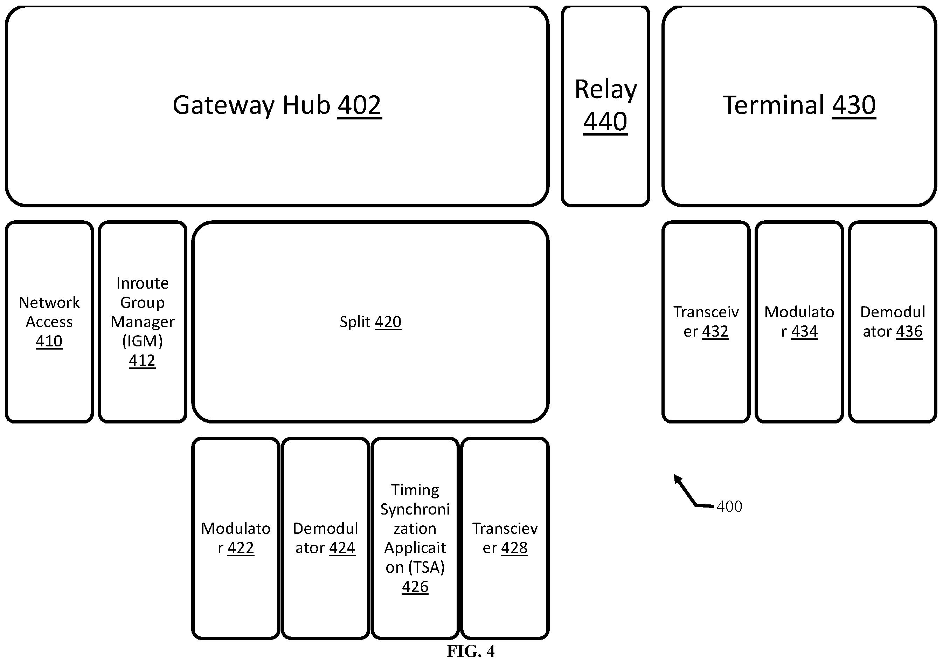

FIG. 4 is a logical diagram of an exemplary system that may be implemented on a split location hub for an embodiment of the invention.

A communication system 400 can include a gateway hub 402, a remote terminal 430 and a relay 440. The gateway hub 402 can include a network access 410. The network access 410 can provide access to the Internet, an enterprise network, a private network or the like. In exemplary embodiments, the network 410 can provide a hub functionality of the gateway hub 402. The hub functionality is where a traffic sink or source resides.

The gateway hub 402 can include a split 420 including a modulator 422, a demodulator 424, a timing synchronization application (TSA) 426 and a transceiver 428. The split 420 can provide a gateway functionality of the gateway hub 402. The gateway functionality where a Timing Synchronization Application (TSA) and the modulators reside.

In exemplary embodiments, the split 420 can be co-located with the network access 410. As such, all components of the gateway hub 402 can be co-located.

In exemplary embodiments, the split 420 can be implemented a far distance from the network access 410. In exemplary embodiments, the split 420 of the gateway hub 402 can be implemented in or co-located with the relay 440.

According to various embodiments, the remote terminal 430 can include a transceiver 432, a modulator 434 and a demodulator 436. The remote terminal 430 can be located remote from the network access 410, the split 420 and the relay 430.

The TSA 426 can determine the propagation time from the gateway hub 402 to the relay 440, and the propagation time from the relay 440 to the remote terminal 430 (respectively, **T_{HS}** and **T_{SR}** propagation times illustrated in FIG .3).

The gateway hub 402 can include an inroute group manager (IGM) 412. In exemplary embodiments, the TSA 426 can determine the space-time offset **T_{HO}** and provide the space-time offset **T_{HO}** to the IGM 412. The IGM 412 can utilize the propagation times determined by the TSA to perform various activities, for example, bandwidth allocation, forward error correction and the like.

Although the subject matter has been described in language specific to structural features and/or methodological acts, it is to be understood that the subject matter in the appended claims is not necessarily limited to the specific features or acts described above. Rather, the specific features and acts described above are disclosed as example forms for implementing the claims.

Although the above descriptions may contain specific details, they should not be construed as limiting the claims in any way. Other configurations of the described embodiments are part of the scope of this disclosure.

## Claims

1. A split gateway hub (402) for a bent-leg communication system (100, 200, 300), wherein the gateway hub comprises:
a modulator (122, 222) to modulate a bit stream into a signal to be transmitted to a remote terminal (430) via a radio frequency, RF, signal;
a Time Synchronization Application, TSA (126, 226), geographically co-located with the modulator, to provide timing reference and synchronization to the remote terminal;
a network access component (110, 210) to provide traffic for the bit stream; and
an Inroute Group Manager, IGM (112, 212) to manage the traffic to and from the remote terminal,
wherein the IGM is disposed geographically remote from either the TSA or from the network access component,
wherein the bent-leg communication system uses a satellite or a High Altitude Platform, HAP (140, 240, 306) for relaying the RF signal; and
wherein the TSA is configured to use ranging to determine a propagation time TSR from the satellite or High Altitude Platform to the remote terminal (430), and is configured to provide the propagation time TSR to the IGM.

2. The gateway hub (402) of claim 1, wherein the TSA (126) is disposed in the satellite or High Altitude Platform, HAP (140, 240, 306) and the IGM (112) is geographically co-located with the network access component (110).

3. The gateway hub (402) of claim 1, wherein the TSA (226) and the IGM (212) are geographically co-located, and the network access component (210) is geographically remote from the TSA.

4. The gateway hub (402) of claim 1, wherein the TSA (126, 226) calculates a space-time offset that represents a time interval between an ideal instant of transmission and a start of reception at a remote terminal (430).

5. The gateway hub (402) of claim 4, wherein the space-time offset is transmitted to the terminal (430) in a Superframe Numbering Packet, SFNP.

6. The gateway hub (402) of claim 4, wherein the remote terminal (430) subtracts the space-time offset from the time when it received to determine the ideal install of transmission to the remote terminal.

7. The gateway hub (402) of claim 4, wherein the TSA (126, 226) calculates the space time offset by at least adding a propagation time **T_{HS}** from a hub to a relay (140, 240, 306), a propagation time **T_{SR}** from the satellite or High Altitude Platform, HAP (140, 240, 306) to a terminal (430), and a terminal offset time **T_{RO}.**

## Patentansprüche

1. Geteilter Gateway-Hub (402) für ein Bent-Leg-Kommunikationssystem (100, 200, 300), wobei der Gateway-Hub Folgendes umfasst:
einen Modulator (122, 222) zum Modulieren eines Bitstroms in ein Signal, das über ein RF-(Radiofrequenz)-Signal an ein entferntes Endgerät (430) übertragen werden soll;
eine Zeitsynchronisationsanwendung TSA (126, 226), die geographisch mit dem Modulator colokalisiert ist, um dem entfernten Endgerät Timing-Referenz und Synchronisation zu geben;
eine Netzzugangskomponente (110, 210), um Verkehr für den Bitstrom bereitzustellen; und
einen Inroute Group Manager IGM (112, 212), um den Verkehr zu und von dem entfernten Endgerät zu verwalten,
wobei der IGM entweder von der TSA oder von der Netzzugangskomponente geographisch entfernt angeordnet ist,
wobei das Bent-Leg-Kommunikationssystem einen Satelliten oder eine Höhenplattform HAP (140, 240, 306) zur Weiterleitung des HF-Signals verwendet; und
wobei die TSA zum Benutzen von Entfernungsmessung konfiguriert ist, um eine Ausbreitungszeit TSR von dem Satelliten oder der Höhenplattform zu dem entfernten Endgerät (430) zu bestimmen, und so konfiguriert ist, dass sie die Ausbreitungszeit TSR dem IGM bereitstellt.

2. Gateway-Hub (402) nach Anspruch 1, wobei die TSA (126) in dem Satelliten oder der Höhenplattform HAP (140, 240, 306) angeordnet ist und die IGM (112) geographisch mit der Netzzugangskomponente (110) colokalisiert ist.

3. Gateway-Hub (402) nach Anspruch 1, bei dem die TSA (226) und der IGM (212) geographisch colokalisiert sind und die Netzzugangskomponente (210) von der TSA geographisch entfernt ist.

4. Gateway-Hub (402) nach Anspruch 1, wobei die TSA (126, 226) einen Raum-Zeit-Versatz berechnet, der ein Zeitintervall zwischen einem idealen Übertragungszeitpunkt und einem Empfangsbeginn an einem entfernten Terminal (430) darstellt.

5. Gateway-Hub (402) nach Anspruch 4, wobei der Raum-Zeit-Versatz in einem Superframe-Nummerierungspaket SFNP an das Terminal (430) übertragen wird.

6. Gateway-Hub (402) nach Anspruch 4, wobei das entfernte Endgerät (430) den Raum-Zeit-Versatz von der Empfangszeit subtrahiert, um die ideale Übertragungseinleitung zu dem entfernten Endgerät zu bestimmen.

7. Gateway-Hub (402) nach Anspruch 4, wobei die TSA (126, 226) den Raum-Zeit-Versatz berechnet, indem sie mindestens eine Ausbreitungszeit T_{HS} von einem Hub zu einem Relais (140, 240, 306), eine Ausbreitungszeit T_{SR} von dem Satelliten oder der Höhenplattform HAP (140, 240, 306) zu einem Endgerät (430) und eine Endgerätversatzzeit T_{RO} addiert.

## Revendications

1. Concentrateur de passerelles divisé (402) pour un système de communication du type « bent-leg » (100, 200, 300), où le concentrateur de passerelles comprend :
un modulateur (122, 222) pour moduler un train binaire dans un signal à transmettre à un terminal distant (430) via un signal radiofréquence, RF ;
une application de synchronisation horaire, TSA, (126, 226), située géographiquement au même endroit que le modulateur, pour fournir une référence horaire et une synchronisation au terminal distant ;
un composant d'accès réseau (110, 210) pour fournir un trafic pour le train binaire ; et
un gestionnaire de groupe de retour, IGM, (112, 212) pour gérer le trafic vers et du terminal distant,
dans lequel l'IGM est disposé géographiquement à distance soit de la TSA soit du composant d'accès réseau,
dans lequel le système de communication du type « bent-leg » utilise un satellite ou une plateforme haute altitude, HAP, (140, 240, 306) pour relayer le signal RF ; et
dans lequel la TSA est configurée pour utiliser une mesure de distance pour déterminer un temps de propagation TSR du satellite ou de la plateforme haute altitude jusqu'au terminal distant (430), et est configurée pour fournir le temps de propagation TSR à l'IGM.

2. Concentrateur de passerelles (402) selon la revendication 1, dans lequel la TSA (126) est disposée dans le satellite ou la plateforme haute altitude, HAP, (140, 240, 306) et l'IGM (112) est situé géographiquement au même endroit que le composant d'accès réseau (110).

3. Concentrateur de passerelles (402) selon la revendication 1, dans lequel la TSA (226) et l'IGM (212) sont situés géographiquement au même endroit, et le composant d'accès réseau (210) est géographiquement à distance de la TSA.

4. Concentrateur de passerelles (402) selon la revendication 1, dans lequel la TSA (126, 226) calcule un décalage espace-temps qui représente un intervalle de temps entre un instant de transmission idéal et un début de réception à un terminal distant (430).

5. Concentrateur de passerelles (402) selon la revendication 4, dans lequel le décalage espace-temps est transmis au terminal (430) dans un paquet de numérotation de supertrame, SFNP.

6. Concentrateur de passerelles (402) selon la revendication 4, dans lequel le terminal distant (430) soustrait le décalage espace-temps de l'heure à laquelle il est reçu pour déterminer l'exécution idéale de la transmission au terminal distant.

7. Concentrateur de passerelles (402) selon la revendication 4, dans lequel la TSA (126, 226) calcule le décalage espace-temps en ajoutant au moins un temps de propagation T_{HS} d'un concentrateur à un relais (140, 240, 306), un temps de propagation T_{SR} du satellite ou de la plateforme haute altitude, HAP, (140, 240, 306) à un terminal (430) et un temps de décalage au terminal T_{RO}.
